# EUROPÄISCHE PATENTSCHRIFT

(11) **EP 1 145 919 B1**
(45) Veröffentlichungstag und Bekanntmachung des Hinweises auf die Patenterteilung: **29.06.2005**
(21) Anmeldenummer: 01108890.3
(22) Anmeldetag: 10.04.2001
(51) Int. Cl.: B60R 21/02, B60R 21/13

(54) **Rückhaltesystem für einen Fahrer, insbesondere eines Flurförderfahrzeugs**
Safety device for a driver of a handling vehicle, in particular
Dispositif de sécurité pour le conducteur d'un véhicule, en particulier de manutention

(30) Priorität: 14.04.2000 DE 10018878; 20.04.2000 DE 10019929; 12.09.2000 DE 20015817 U; 01.12.2000 DE 20020521 U
(43) Veröffentlichungstag der Anmeldung: 17.10.2001
(73) Patentinhaber: Sauermann, Hans, 85119 Ernsgaden (DE)
(72) Erfinder: Sauermann, Hans, 85119 Ernsgaden (DE)
(74) Vertreter: Witzany, Manfred, Dipl.-Phys., Dr.

(56) Entgegenhaltungen:
- EP-A- 0 841 220
- US-A- 4 355 819
- US-A- 4 391 344
- US-A- 5 240 366
- US-A- 5 894 905
- US-A- 5 938 237

## Beschreibung

Die Erfindung betrifft ein Rückhaltesystem für einen Fahrer eines Fahrzeugs gemäß dem Oberbegriff des Patentanspruchs 1.

Aus dem FTL-Forschungsbericht "Rückhaltesysteme für Gabelstaplerfahrer" der Gerhardt-Mercator-Universität Gesamthochschule Duisburg sind verschiedene Rückhaltesysteme für Gabelstaplerfahrer bekannt. Diese Rückhaltesysteme haben die Aufgabe, den Fahrer beim Umkippen eines Flurfahrzeugs, insbesondere mit offener Kabine, innerhalb der Kabine zu halten. Dies ist wichtig, um zu verhindern, daß der Fahrer während des Umkippens unter das Fahrzeug gerät, was zu schweren Verletzungen führen würde. Diese Rückhaltesysteme sollen einerseits dem Fahrer einen ausreichenden Schutz bieten, andererseits das Ein- bzw. Aussteigen des Fahrers und die Bedienung des Fahrzeugs in keiner Weise behindern. Hierzu schlägt die genannte Druckschrift vor, an der linken Fahrerseite einen Bügel vorzusehen, der aus einer in etwa horizontalen Rückhaltestellung in eine in etwa vertikale Freigabestellung verschwenkbar ist. Dieser Bügel besitzt keinerlei Rastposition, so daß er jederzeit, also auch während des Umkippens des Fahrzeugs in die Freigabestellung gelangen kann und somit den Fahrer nur unzureichend schützt. In einem weiteren Ausführungsbeispiel zeigt diese Druckschrift einen Bügel, der durch einen Hydraulikzylinder oder einen Hubmagneten in die Freigabestellung verschwenkbar ist. Dieser Antrieb des Bügels steht mit einem Sitzkontaktschalter in Wirkverbindung, der den Bügel in die Rückhaltestellung verschwenkt, sobald der Fahrer auf dem Fahrersitz Platz nimmt. Zur Verschwenkung des Bügels in die Freigabestellung muß der Fahrer einen gesonderten Schalter betätigen. Dieses Bügelsystem bietet dem Fahrer zwar ausreichende Sicherheit, es läßt sich jedoch insbesondere bei kleinen Elektrostaplern aufgrund des hohen Stromverbrauchs des Hubmagneten nicht einsetzen. Da kleine Elektrostapler aufgrund ihres geringen Gewichts bei maximal angehobener Last einen sehr hohen Schwerpunkt und zudem regelmäßig eine offene Kabine besitzen, besteht gerade bei diesen Fahrzeugen ein besonders großer Bedarf an einem wirksamen Rückhaltesystem für den Fahrer.

Aus der EP-A-0 841 220 ist eine gattungsgemäße Sitzeinrichtung mit einer Sicherheitsvorrichtung für land- und bauwirtschaftliche Arbeitsmaschinen bekannt. Diese weist einen Fahrersitz auf, dem ein Zusatzsitz zugeordnet ist. Zur Sicherung der auf dem Zusatzsitz sitzenden Person bei Unfällen ist ein Schutzbügel vorgesehen, der unter dem Zusatzsitz verschwehkbar gelagert ist. Dabei kann der Schutzbügel von einer die Person schützende Rückhaltestellung in eine Freigabestellung verschwenkt werden.

Aus der US-A-5 240 366 ist ein Radlader bekannt, der ebenfalls einen Fahrersitz aufweist. Die gesamte Bedienungskonsole des Radladers ist verstellbar gehalten, um einerseits ein einfaches Ein- bzw. Aussteigen des Fahrers und andererseits eine leichte Zugänglichkeit der Steuerknüppel zu ermöglichen. An der Bedienkonsole ist auch ein Rückhaltebügel gehalten, der zusammen mit der Bedienkonsole verschwenkbar ist.

Aus der US-A-5 894 905 ist ein Rückhaltesystem für ein Arbeitsfahrzeug bekannt. Dieses weist einen Schutzbügel auf, der neben dem Fahrersitz angeordnet ist. Der Schutzbügel ist von einem elektrischen oder hydraulischen Aktuator zwischen einer Rückhaltestellung und einer Freigabestellung verschwenkbar.

Der Erfindung liegt die Aufgabe zugrunde, ein Rückhaltesystem der eingangs genannten Art zu schaffen, das einen wirksamen Schutz für den Fahrer beim Umkippen des Fahrzeugs bietet und auch bei kleinen Fahrzeugen genutzt werden kann.

Diese Aufgabe wird mit den Merkmalen der Patentansprüche 1 bzw. 8 gelöst.

Das Rückhaltesystem gemäß Anspruch 1 weist mindestens einen seitlich neben dem Fahrersitz angeordneten Schutzbügel auf, der um eine Welle zwischen einer in etwa vertikalen Freigabestellung und einer in etwa horizontalen Rückhaltestellung verschwenkbar ist. In der Freigabestellung kann der Fahrer ohne Behinderung durch den Schutzbügel in das Fahrzeug ein- bzw. aus diesem aussteigen, was insbesondere unter beengten Platzverhältnissen, wie beispielsweise in Lagern, von Bedeutung ist. Außerdem besteht so nicht die Gefahr, daß sich der Fahrer durch das Rückhaltesystem behindert fühlt, so daß das Rückhaltesystem eine ausreichend hohe Akzeptanz durch den Fahrer besitzt und nicht von diesem einfach abgebaut wird. Vorzugsweise befindet sich der Schutzbügel in der Rückhaltestellung im Hüftbereich des Fahrers und erstreckt sich über mindestens die Hälfte des Fahrersitzes, um einen ausreichenden Schutz des Fahrers beim Umkippen des Fahrzeugs zu gewährleisten. Um das Rückhaltesystem auch in kleinen Elektrostaplern einbauen zu können, steht die Welle über ein Getriebe mit einem Elektromotor in Wirkverbindung. Ein Elektromotor zeichnet sich gegenüber einem Hubmagneten durch einen besonders geringen Stromverbrauch aus, so daß er das Bordnetz des Fahrzeugs nur geringfügig belastet. Zur Anpassung an das Bordnetz kann ggf. ein DC-DC-Wandler und/oder ein Spannungsfilter vorgesehen sein. Damit wird die Reichweite des Fahrzeugs, die durch die in den Batterien gespeicherte Ladung begrenzt ist, durch das Rückhaltesystem nur unwesentlich reduziert, was für die Akzeptanz dieses Rückhaltesystems von entscheidender Bedeutung ist. Um mit dem Elektromotor das erforderliche Drehmoment auf die Welle ausüben zu können, steht dieser über das Getriebe mit der Welle in Wirkverbindung. Dieses Getriebe sorgt für eine ausreichende Untersetzung der Drehbewegung der Antriebswelle des Elektromotors, so daß der Elektromotor wirtschaftlich im Bereich seiner Nenndrehzahl betrieben werden kann. Die Schwenkbewegung der Welle und des Schutzbügels erfolgt trotzdem ausreichend langsam, um übermäßige Beschleunigungskräfte zu vermeiden. Grundsätzlich wäre es vorstellbar, die Welle mit der Kraft des Elektromotors in der Rückhaltestellung zu halten, so daß auf zusätzliche Verriegelungsmaßnahmen grundsätzlich verzichtet werden könnte. Damit würde jedoch der Elektromotor ständig elektrischen Strom vom Bordnetz des Fahrzeugs ziehen, wodurch sich die Reichweite des Fahrzeugs entsprechend verringern würde. Alternativ könnte das Getriebe zwischen der Welle und dem Elektromotor auch als selbsthemmendes Getriebe ausgebildet sein, was beispielsweise durch ein Schneckengetriebe realisiert werden könnte. Ein derartiges selbsthemmendes Getriebe besitzt jedoch einen relativ schlechten Wirkungsgrad, was ebenfalls einen erhöhten Energieverbrauch zur Folge hätte. Zur Vermeidung dieser Nachteile ist es günstig, die Welle in der Rückhaltestellung zusätzlich zu verriegeln. Dies erfolgt am einfachsten, indem an der Welle eine Kurvenscheibe abgestützt ist, die vom Elektromotor angetrieben wird. In eine teilkreisförmige Durchbrechung dieser Kurvenscheibe greift ein Verriegelungsstift ein, der von dieser axial verschoben wird. Die Welle ist über einen Totgang vom Elektromotor angetrieben. Damit kann die Kurvenscheibe den Verriegelungsstift zurückziehen, bevor die Welle verschwenkt wird. Diese Bewegung kann vorteilhaft zur Verriegelung der Welle in der Rückhaltestellung ausgenutzt werden.

Eine besonders einfache und gleichzeitig wirkungsvolle Verriegelungsvorrichtung für die Welle ergibt sich aus Anspruch 2. Die Kurvenscheibe bildet dabei mindestens eine Anlagefläche für einen Verriegelungsstift, so daß dieser bei dessen Bewegung durch den Elektromotor diese Anlagefläche abtastet. Die Anlagefläche weist eine Steigung auf, so daß der Verriegelungsstift bei der Bewegung entlang der Kurvenscheibe zwischen einer Ver- und einer Entriegelungsstellung axial verschoben wird. Diese axiale Bewegung des Verriegelungsstifts kann sehr einfach zur Verriegelung der Welle herangezogen werden.

Vorzugsweise wirkt der Verriegelungsstift gemäß Anspruch 3 in der Verriegelungsstellung mit einer Sperrnocke zusammen. Diese Sperrnocke ist bevorzugt stationär gehalten, so daß ein Verdrehen der Welle in der Verriegelungsstellung zuverlässig ausgeschlossen ist. Damit ist die Wirksamkeit des Rückhaltesystems nicht von der Funktionstüchtigkeit des Bordnetzes des Fahrzeugs bzw. des Elektromotors abhängig.

Grundsätzlich ist es vorstellbar, die Kurvenscheibe mit gegeneinander gerichteten Anlageflächen für den Verriegelungsstift auszurüsten, um diesen zwangsweise axial zu verstellen. Einfacher ist es jedoch, wenn der Verriegelungsstift gemäß Anspruch 4 durch eine Feder gegen die Kurvenscheibe vorgespannt ist. In diesem Fall genügt eine einfache Anlagefläche, die vom Verriegelungsstift abgetastet wird.

Die Welle läßt sich durch einfaches Betätigen des Elektromotors jederzeit in die Freigabestellung bringen, wozu vorzugsweise im Fahrzeug ein einfacher Schalter bzw. Taster vorgesehen sein könnte. Im Falle eines Ausfalls des Bordnetzes oder des Elektromotors wäre in diesem Fall jedoch eine Überführung der Welle in die Freigabestellung nicht mehr möglich. Um den Fahrer auch unter diesen Umständen ein einfaches Verlassen des Fahrzeugs zu ermöglichen, wird gemäß Anspruch 5 vorgeschlagen, daß der Verriegelungsstift mit einem Handhebel in Wirkverbindung steht. Dieser Handhebel dient zur Überführung des Verriegelungsstiftes in die Entriegelungsstellung, so daß die Welle anhand des Schutzbügels auch ohne Betätigung durch den Elektromotor in die Freigabestellung bringbar ist. Da zur Entriegelung der Welle ein gesonderter Handhebel betätigt werden muß, wird hierdurch die Sicherheit des Rückhaltesystems während der Fahrt des Fahrzeugs nicht beeinträchtigt.

Zur Erzielung eines möglichst einfachen Aufbaus des Rückhaltesystems ist es vorteilhaft, wenn die Welle gemäß Anspruch 6 ein Langloch aufweist, in das ein Stift zur Drehmomentübertragung vom Elektromotor auf die Welle eintaucht. Damit ergibt sich ein einfacher Aufbau zur Realisierung des Totgangs der Welle.

Um eine einfache Bedienbarkeit des Rückhaltesystems bei gleichzeitig hoher Sicherheit für den Fahrer zu erzielen, ist es gemäß Anspruch 7 vorteilhaft, den Schutzbügel als Verriegelungsvorrichtung zu nutzen. Der Schutzbügel ist hierzu in der Rückhaltestellung um eine in etwa vertikale Achse zwischen einer Ver- und einer Entriegelungsstellung verschwenkbar, so daß zur Entriegelung der Welle kein zusätzliches Betätigungselement erforderlich ist. Die Welle weist mindestens eine Anschlagfläche auf, die mit dem Schutzbügel in dessen Verriegelungsstellung zusammenwirkt und ein Verschwenken des Schutzbügels nach außen verhindert. In der Entriegelungsstellung ist die Welle dagegen in die Freigabestellung verdrehbar. Die Verdrehung der Welle kann in diesem Fall durch den Elektromotor oder selbsttätig durch die Wirkung einer Feder bzw. durch Schwerkraftwirkung des Schutzbügels erfolgen.

Zur Verbesserung der Schutzwirkung des Schutzbügels ist es gemäß Anspruch 8 günstig, mindestens zwei Anschlagflächen an der Welle vorzusehen. Vorzugsweise befindet sich eine der Anschlagflächen stirnseitig und eine radialseitig zur Welle, um eine möglichst sichere Sperrwirkung zu erzielen.

Um den Schutzbügel in unbetätigter Lage sicher in der Verriegelungsstellung zu halten, wird dieser gemäß Anspruch 9 vorteilhaft durch eine Feder in Richtung der Verriegelungsstellung belastet.
Der Schutzbügel ist gemäß Anspruch 10 in der Entriegelungsstellung zum Fahrer hin verschwenkt, um beim Umkippen des Fahrzeugs ein versehentliches Entriegeln der Welle zu vermeiden. In diesem Fall wird der Fahrer gegen den Schutzbügel gedrückt, so daß dieser zusätzlich in Richtung der Verriegelungsstellung belastet wird.

Um sicherzustellen, daß der Schutzbügel in die Rückhaltestellung gebracht wird, ist es gemäß Anspruch 11 vorteilhaft, daß an der Welle mindestens eine diese in Schwenkrichtung belastende Feder angreift. Diese Feder kann ggf. durch das Drehmoment des Elektromotors unterstützt werden.

Zur Erzielung einer möglichst guten Anpassung des Schutzbügels an den Fahrer ist die Welle gemäß Anspruch 12 vorteilhaft am Fahrersitz abgestützt. Damit wird die Welle und somit der Schutzbügel zusammen mit dem Fahrersitz verstellt, so daß die relative Position zwischen beiden stets erhalten bleibt. Damit wird verhindert, daß ein Fahrer bei sehr tief eingestelltem Fahrersitz mit einem Bein unter dem Schutzbügel durchrutschen kann. Alternativ ist es auch vorstellbar, die Welle am Fahrzeugrahmen abzustützen, was die Montage des gesamten Rückhaltesystems erheblich vereinfacht.

Zur weiteren Verbesserung der Anpassung des Schutzbügels an den Fahrer ist gemäß Anspruch 13 vorgesehen, daß die Welle in ihrer Position verstellbar ist. Damit kann jeder Fahrer den Schutzbügel seinen Bedürfnissen entsprechend einstellen. Alternativ oder zusätzlich ist eine teleskopartige Verlängerung der Welle vorgesehen, so daß der seitliche Abstand des Schutzbügels vom Fahrersitz ebenfalls den Bedürfnissen des Fahrers entsprechend eingestellt werden kann.

Um ein Verdrehen der Welle über die Freigabe- bzw. Rückhaltestellung hinaus zu verhindern, ist es gemäß Anspruch 14 günstig, daß die Welle mit Endanschlägen in Wirkverbindung steht. Diese werden vorzugsweise von Stiften gebildet, die mit der Sperrnocke zusammenwirken.

Zur Erzielung einer wirksamen Verriegelung der Welle in der Rückhaltestellung ist es gemäß Anspruch 15 vorteilhaft, mindestens einen am Schutzbügel federnd gehaltenen Stift in eine Bohrung eines Halteblechs eingreifen zu lassen. Dieses Halteblech ist stationär abgestützt und Z-förmig gebogen, um zusätzlich beim Überführen des Schutzbügels in die Rückhaltestellung dessen Aufprall zu dämpfen.

Um sicherzustellen, daß sich der Schutzbügel während des Betriebs des Fahrzeugs jedenfalls in der Rückhaltestellung befindet, ist es gemäß Anspruch 16 günstig, wenn die Welle mit einem Sensor in Wirkverbindung steht. Dieser Sensor verdreht bei Fahrbereitschaft des Fahrzeugs die Welle in die Rückhaltestellung. Der Sensor könnte beispielsweise ein Sitzkontakt sein, der das Niedersetzen des Fahrers auf den Fahrersitz registriert. Alternativ oder zusätzlich könnte der Sensor auch die Stellung des Fahrtrichtungs-Wählhebels, der Handbremse, der Pedalwippe oder des Steuerungsjoysticks erfassen. Ebenso ist denkbar, mit dem Sensor die Geschwindigkeit des Fahrzeugs oder die Lage der Hebewerkzeuge des Fahrzeugs zu überwachen. In jedem dieser Fälle ist sichergestellt, daß während des Betriebs des Fahrzeugs der Schutzbügel in die Rückhaltestellung verschwenkt wird, um den Fahrer zu schützen.

Schließlich ist es gemäß Anspruch 17 vorteilhaft, wenn die Welle mit einem Arretierstift zusammenwirkt, der diese bei geöffneter Motorhaube arretiert. Damit wird bei Service- oder Wartungsarbeiten am Fahrzeug ein Verschwenken des Schutzbügels zuverlässig verhindert, was die Wartungsarbeiten erheblich vereinfacht.

Der Erfindungsgegenstand wird beispielhaft anhand der Zeichnung erläutert, ohne den Schutzumfang zu beschränken.

Es zeigt:
- Figur 1: eine Seitenansicht eines schematisch dargestellten Flurförderfahrzeuges,
- Figur 2: eine Rückansicht eines Ausschnitts des Fahrzeugs gemäß Figur 1,
- Figur 3: eine zugeordnete Schnittdarstellung des Ausschnitts gemäß Figur 2 entlang der Schnittlinie III-III in der Freigabestellung der Schutzbügel,
- Figur 4: die Schnittdarstellung gemäß Figur 3 in der Rückhaltestellung der Schutzbügel,
- Figur 5: eine Detaildarstellung gemäß Figur 2,
- Figur 6: eine zugeordnete Schnittdarstellung des Details gemäß Figur 5 entlang der Schnittlinie VI-VI,
- Figur 7: eine Seitenansicht einer alternativen Ausführungsform,
- Figur 8: eine zugeordnete Vorderansicht der Ausführungsform gemäß Figur 7 in der Rückhaltestellung der Schutzbügel,
- Figur 9: die Ansicht gemäß Figur 8 in der Freigabestellung der Schutzbügel,
- Figur 10: eine Schnittdarstellung durch die Welle der Schutzbügel und
- Figur 11: eine Schnittdarstellung einer Verriegelungsvorrichtung für den Schutzbügel.

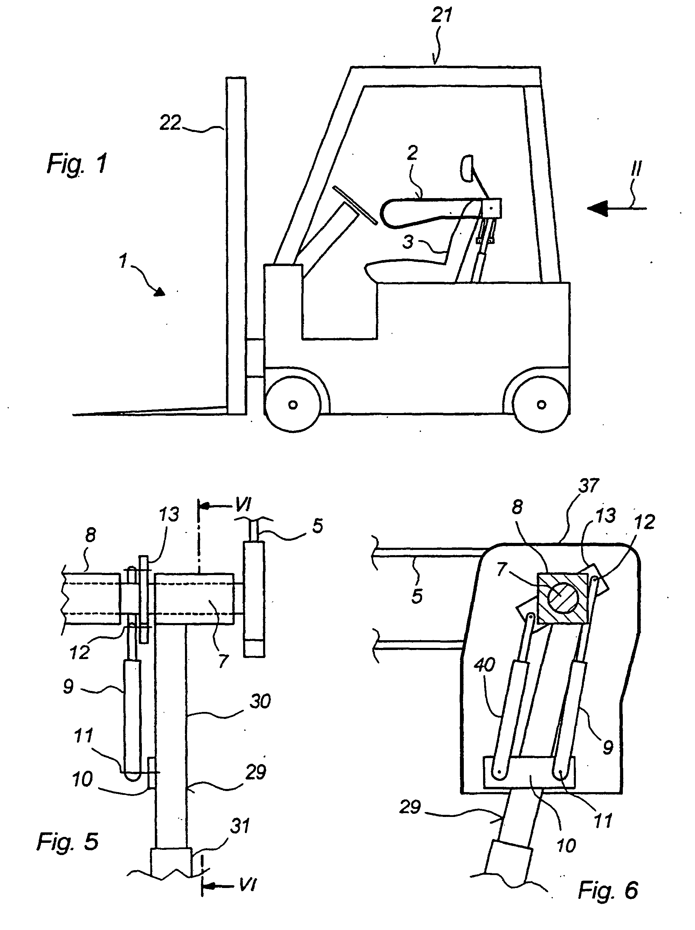

Figur 1 zeigt schematisch ein Flurförderfahrzeug 1, insbesondere einen Gabelstapler 1, der mit einer Rückhaltevorrichtung 2 für einen nicht dargestellten Fahrer ausgerüstet ist. Das Flurförderfahrzeug 1 weist eine Dachkonstruktion 21 auf, die eine offene Kabine bildet. Innerhalb dieser Kabine ist ein Fahrersitz 3 angeordnet. Das Flurförderfahrzeug 1 weist außerdem ein Hebewerkzeug 22 auf, das jedoch nicht Gegenstand der Erfindung ist, so daß auf dieses im weiteren nicht näher eingegangen wird.

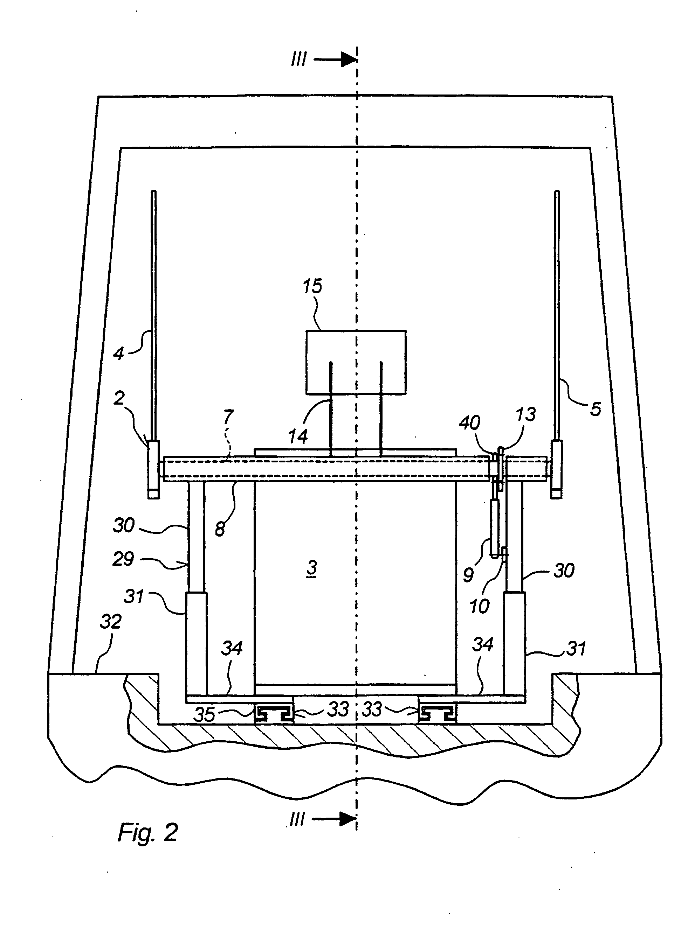

Figur 2 zeigt eine Rückansicht eines Ausschnitts des Flurförderfahrzeugs 1 gemäß Figur 1. Die Rückhaltevorrichtung 2 besteht aus zwei, links und rechts neben dem Fahrersitz 3 angeordneten Schutzbügeln 4, 5, die mit einer um ihre Längsachse schwenkbaren Welle 7 drehfest verbunden sind. Mit Hilfe dieser Welle 7 sind die Schutzbügel 4, 5 aus der in Figur 2 dargestellten Freilage in die in Figur 1 dargestellte Rückhaltelage verschwenkbar.

Die Welle 7 ist in einem hinter dem Fahrersitz 3 quer zum Fahrzeug 1 verlaufenden Querträger 8 drehbar abgestützt, der die Lagerung für die Welle 7 bildet. Die Schutzbügel 4, 5 bestehen vorzugsweise aus gebogenen Rohren. Sie können jedoch auch aus Vollmaterial hergestellt sein.

Die Welle 7 wird durch eine Gasfeder 9 in Richtung der Rückhaltestellung vorgespannt, so daß sich die Schutzbügel 4, 5 ohne Betätigung stets in der Rückhaltestellung befinden. Zusätzlich sind die Schutzbügel 4, 5 derart ausgebildet, daß ihr Schwerpunkt - in Projektion betrachtet - etwas vor der Welle 7 liegt, so daß sie auch durch Schwerkraft in die Rückhaltestellung gedrückt werden.

Der Querträger 8 ist über annähernd vertikal verlaufende, teleskopartige Streben 29 und Fußstücke 34 mit dem Fahrersitz 3 verbunden. Der Fahrersitz 3 ist über ineinandergreifende Führungsschienen 33, 35 in Fahrzeuglängsrichtung verschiebbar, um eine Anpassung des Fahrersitzes 3 an den jeweiligen Fahrer zu ermöglichen. Durch die Festlegung des Querträgers 8 am unteren Ende des Fahrersitzes 3 wird erreicht, daß die Rückhaltevorrichtung 2 bei einer Verstellung des Fahrersitzes 3 ebenfalls mitverstellt wird.

Die Streben 29 sind teleskopartig ausgebildet und bestehen aus ineinandergreifenden Rohren 30, 31, um eine Höhenverstellung des Querträgers 8 zu ermöglichen. Damit kann die Lage der Schutzbügel 4, 5 in der Rückhaltestellung genau an die Bedürfnisse des jeweiligen Fahrers angepaßt werden. Die teleskopartigen Streben 29 sind längsverschiebbar über die Führungsschienen 33, 35 am Fahrzeugchassis 32 abgestützt.

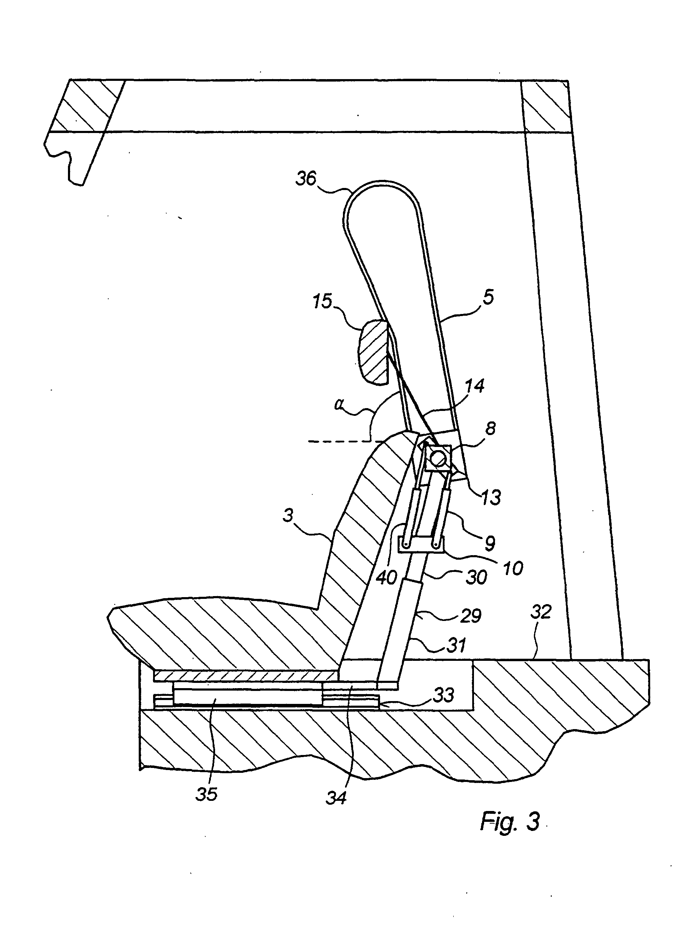

Figur 3 zeigt eine Schnittdarstellung durch das Flurfahrzeug gemäß Figur 2 entlang der Schnittlinie III-III. Aus dieser Darstellung ist zu erkennen, daß die Schutzbügel 4, 5 um einen Winkel α kleiner als 90°, nämlich ca. 80°, verschwenkt sind. Auf diese Weise wird der Schwerpunkt der Schutzbügel 4, 5 noch weiter nach vorne verlegt, um die Wirkung der Gasfeder 9 zu unterstützen. Die Gasfeder 9 ist an einer Halteplatte 10 abgestützt, die mit der teleskopartigen Strebe 29 verbunden ist. An dieser Halteplatte 10 ist eine weitere Gasfeder 40 abgestützt, die der Gasfeder 9 entgegenwirkt. Diese Gasfeder 40 ist schwächer als die Gasfeder 9 dimensioniert und bremst die Schwenkbewegung der Schutzbügel 4, 5 vor Erreichen der Rückhaltestellung ab, um ein hartes Aufschlagen der Schutzbügel 4, 5 zu verhindern.

Im vorderen Bereich 36 weisen die Schutzbügel 4, 5 eine bauchige Ausformung auf, um in der Rückhaltestellung ein Durchrutschen des Oberschenkels zwischen dem Fahrersitz 3 und dem Schutzbügel 4, 5 zu verhindern.

Um die Geschwindigkeit der Schwenkbewegung der Schutzbügel 4, 5 zu reduzieren, ist es vorstellbar, neben den Gasfedern 9, 40 eine Bremseinrichtung vorzusehen, die auf die Welle 7 einwirkt.
Am Querträger 8 ist über ggf. verstellbare Stangen 14 eine Kopfstütze 15 befestigt. Zur Erzielung einer Anpassung an unterschiedliche Sitzbreiten ist daran gedacht, den Querträger 8 aus ineinandergreifenden Profilen zu erstellen, so daß dessen Länge anpaßbar ist.

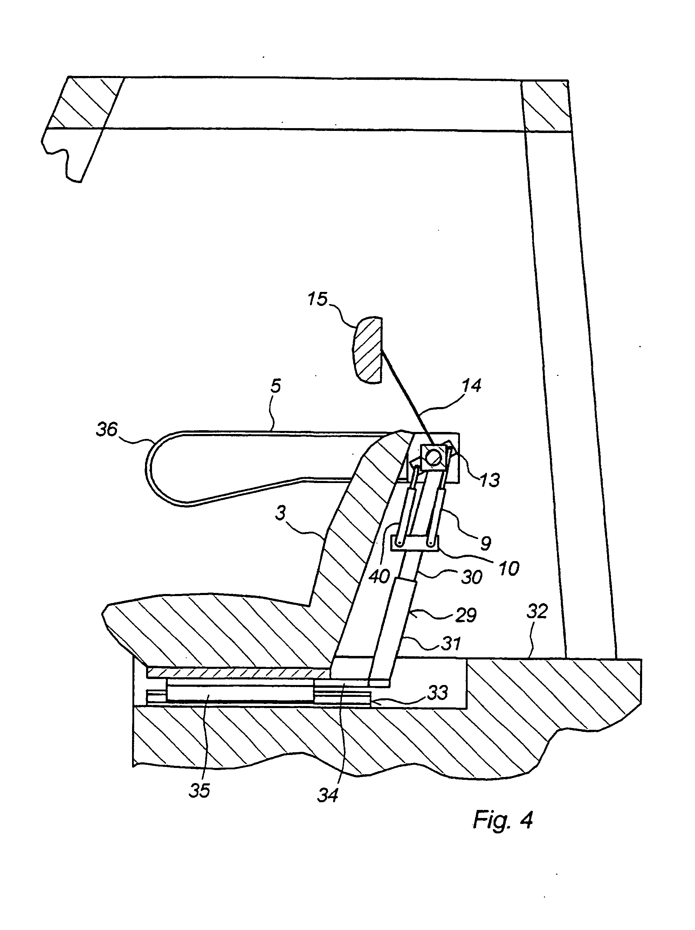

Figur 4 zeigt das Fahrzeug gemäß Figur 3 in der Rückhaltestellung der Schutzbügel 4, 5. In dieser Stellung zeigen die Schutzbügel 4, 5 in etwa horizontal nach vorne, um den Fahrer zu schützen.

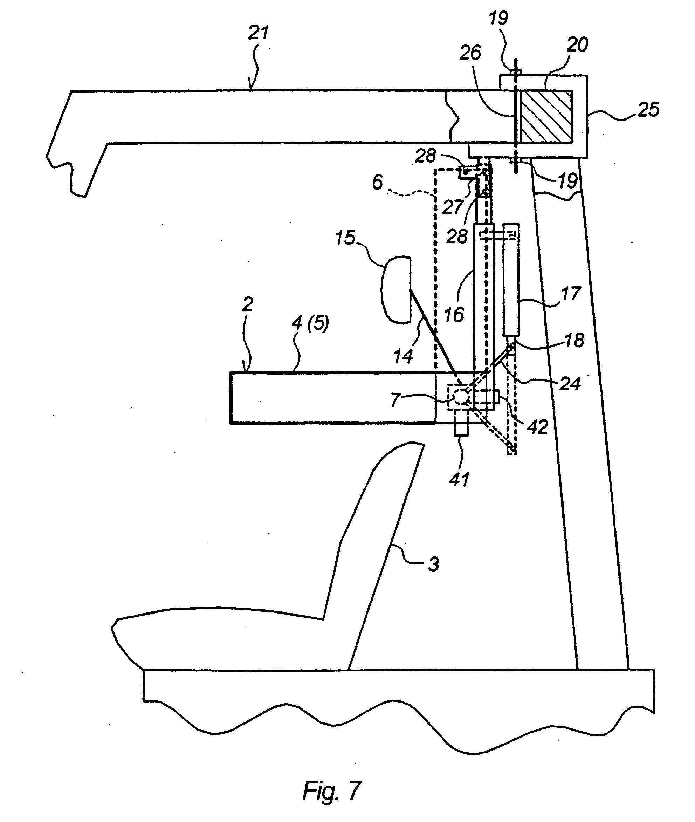

Die Figuren 5 und 6 zeigen zugeordnete Darstellungen eines Details der Rückhaltevorrichtung 2.

An der Welle 7 ist eine Halteplatte 13 drehfest angebracht, an der die beiden Gasfedern 9, 40 über angedeutete Gelenke 12 angreifen. Am Gegenende sind die Gasfedern 9, 40 über weitere, angedeutete Gelenke 11 mit der Halteplatte 10 verbunden.

Im Bereich der Halteplatte 13 weist der Querträger 8 eine entsprechende Aussparung auf, um Platz für die Bewegung der beiden Gasfedern 9, 40 zu schaffen.

Die Gasfedern 9, 40, sowie die Halteplatten 10, 13 sind zum Schutz vor Verletzungen sowie Verschmutzung innerhalb eines nur in Figur 6 dargestellten Schutzgehäuses 37 untergebracht. In den Figuren 1 bis 5 ist dieses Schutzgehäuse 37 entfernt, um die darunterliegenden Gasfedern 9, 40 zu sehen. Dieses Schutzgehäuse 37 ist derart geformt, daß es für den Fahrer eine Armlehne bildet, auf die er sich beim Rückwärtsfahren abstützen kann. Damit kann der Fahrer trotz gedrehtem Oberkörper eine angenehme Sitzhaltung einnehmen.

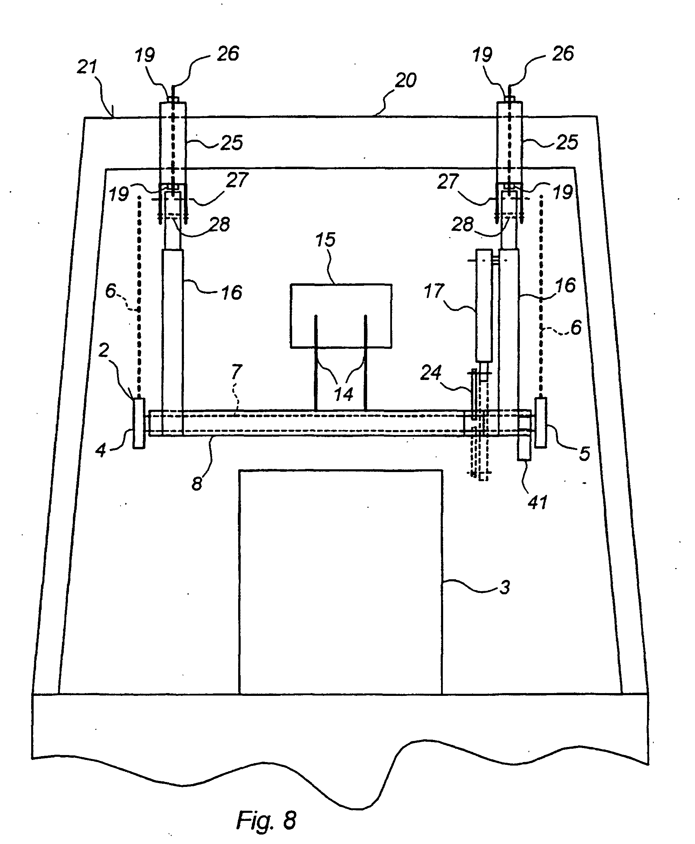

Die Figuren 7 und 8 zeigen ein alternatives Ausführungsbeispiel einer Rückhaltevorrichtung gemäß Figur 2, wobei gleiche Bezugszeichen stets die gleichen Teile benennen.

Die Schutzbügel 4, 5 weisen eine besonders einfache, rechteckförmige Gestaltung auf und sind drehfest mit der im Querträger 8 gelagerten Welle 7 verbunden. Die Freigabestellung der Schutzbügel 4, 5 ist in der Figur 7 strichliert dargestellt und mit dem Bezugszeichen 6 bezeichnet.

Der Querträger ist über in ihrer Länge verstellbare Teleskopstangen 16 mit U-förmigen Halteprofilen 25 verbunden. Diese Halteprofile 25 sind mit Bolzen 26 und Muttern 19 an einem Querholm 20 der Dachkonstruktion 21 des Flurförderfahrzeugs 1 befestigt. Durch die Befestigung der Rückhaltevorrichtung 2 an der Dachkonstruktion 21 des Flurförderfahrzeugs 1 ist ein Nachrüsten der Rückhaltevorrichtung 2 auch bestehender Fahrzeuge 1 kein Problem.

An den Teleskopstangen 16 ist ein Öldämpfer 17 abgestützt, dessen Kolbenstange 18 auf eine drehfest mit der Welle 7 verbundene Stange 24 einwirkt. Dieser Öldämpfer 17 sorgt für die erforderliche Vorspannkraft, um die Schutzbügel 4, 5 in die Rückhaltestellung zu überführen. Alternativ könnte statt des Öldämpfers 17 auch eine Gas-oder Spiralfeder eingesetzt werden.
An der Welle 7 sind Arretierungen 41, 42 vorgesehen, um die Welle 7 einerseits in der Freigabestellung und andererseits in der Rückhaltestellung zu arretieren. Die Arretierung 41 für die Rückhaltestellung ist durch eine Druckkugel an der Welle 7 gebildet. Diese stellt sicher, daß die Schutzbügel 4, 5 nicht versehentlich während des Fahrens in die Freigabestellung verschwenkt werden können. Außerdem ist daran gedacht, zusätzlich einen gesondert zu betätigenden Lösemechanismus für die Arretierung 41 in der Rückhaltestellung der Welle 7 vorzusehen, der vom Fahrer betätigt werden muß.

Die Arretierung 42 für die Freigabestellung der Welle 7 besitzt einen selbsttätig wirkenden Lösemechanismus, der die Arretierung 42 löst, wenn sich der Fahrer auf den Fahrersitz 3 setzt. Dazu ist im Fahrersitz 3 ein nicht dargestellter Sensor vorgesehen, der einen bei Belastung auslösenden elektrischen Kontaktschalter besitzt. Die Arretierung 42 ist als Sicherungsbolzen ausgeführt, der beim Schließen des Sensors elektromagnetisch herausgezogen wird und die Welle aus der Arretierung 42 frei gibt. Solange der Fahrer auf dem Fahrersitz 3 sitzt, ist damit eine Arretierung der Schutzbügel 4, 5 in der Freigabestelle nicht möglich. Dies stellt sicher, daß die Schutzbügel 4, 5 bei besetztem Fahrersitz 3 stets durch die Vorspannkraft in die Rückhaltestellung verschwenkt sind. Alternativ oder zusätzlich zu einem Sitzkontaktschalter könnten auch andere Sensoren herangezogen werden, die den Betriebszustand des Fahrzeugs erfassen.

Die Teleskopstangen 16 sind an der Dachkonstruktion 21 um eine quer zur Fahrzeuglängsrichtung verlaufende Achse 27 verschwenkbar. Auf diese Weise kann die gesamte Rückhaltevorrichtung 2 um 90° nach vorne bzw. hinten geschwenkt werden.

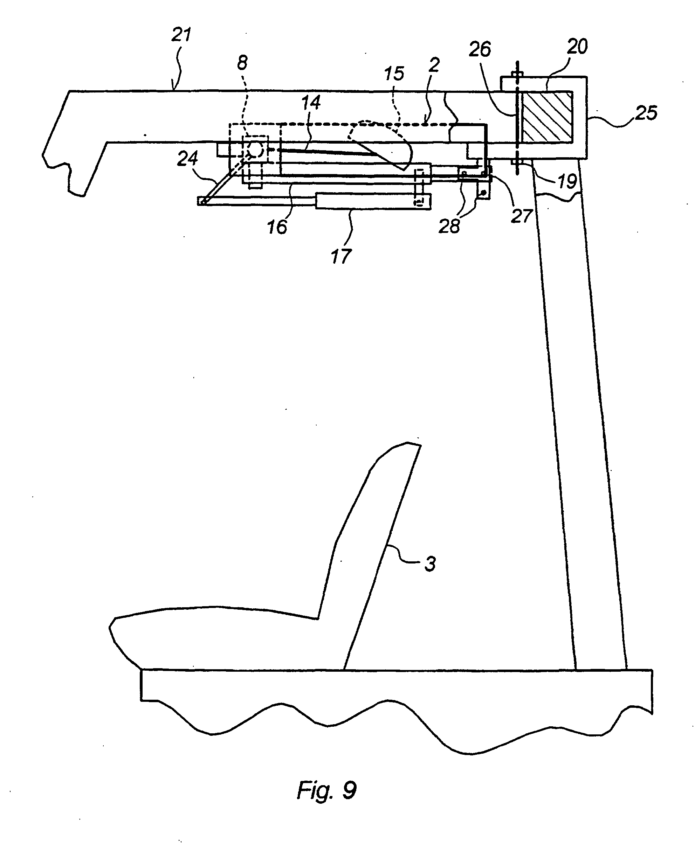

Figur 9 zeigt die Rückhaltevorrichtung 2 in verschwenkter Lage. Hieraus ist zu ersehen, daß durch das Verschwenken der Rückhaltevorrichtung 2 ausreichend Platz in der Fahrzeugkabine verbleibt, um eine Motorhaube problemlos öffnen und im Motorbereich hantieren zu können. Vorzugsweise ist auch die Kopfstütze 15 verschwenkbar gehalten, damit diese den Zugang zum Motorraum nicht behindert.

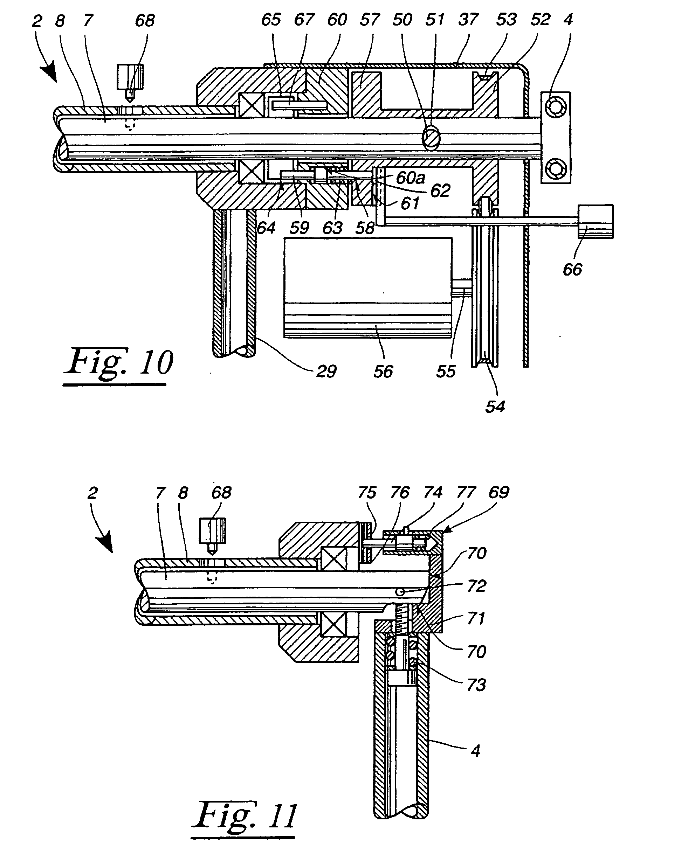

Figur 10 zeigt eine Schnittdarstellung einer Rückhaltevorrichtung 2, wobei gleiche Bezugszeichen wieder gleiche Teile benennen. Der Schutzbügel 4 ist drehfest mit der Welle 7 verbunden. Auf dieser Welle 7 ist über einen Stift 50, der in ein Langloch 51 der Welle 7 eingreift, eine Riemenscheibe 52 begrenzt drehbar gehalten. Diese Riemenscheibe 52 steht über einen Riemen 53 mit einer weiteren Riemenscheibe 54 in Wirkverbindung, die von einer Antriebswelle 55 eines Elektromotors 56 zur Drehung angetrieben ist. Der Elektromotor 56 ist mit einem nicht dargestellten, untersetzenden Getriebe ausgerüstet, um eine entsprechend niedrige Drehzahl der Riemenscheibe 54 zu erzielen. Durch den in das Langloch 51 eingreifenden Stift 50 ist die Welle 7 beschränkt gegenüber der Riemenscheibe 52 verdrehbar. Sobald der Stift am Ende des Langlochs 51 anstößt, ergibt sich eine formschlüssige Verbindung zwischen der Riemenscheibe 52 und der Welle 7, so daß der Schutzbügel 4 durch den Elektromotor 56 verschwenkt wird.

Um den Schutzbügel 4 in der Rückhaltestellung arretieren zu können, ist ein axial verschiebbarer Verriegelungsstift 59 vorgesehen, der eine drehfest mit der Riemenscheibe 52 verbundene Kurvenscheibe 57 durchdringt. Diese Kurvenscheibe 57 ist mit einer Durchbrechung 58 versehen, welche bogenförmig und konzentrisch zur Welle 51 um etwa 90° verläuft. Der Verriegelungsstift 59 ist in einer Bohrung 60a einer stationär gehaltenen Scheibe 60 gehalten, und damit drehfest aber axial verschiebbar geführt.

Die Kurvenscheibe 57 weist eine Anlagefläche 61 auf, die entsprechend einer Gewindesteigung in Form einer Helixfläche ausgebildet ist. Diese Anlagefläche 61 wird von einer Scheibe 62 des Verriegelungsstifts 59 abgetastet. Hierdurch wird der Verriegelungsstift 59 während der Relativbewegung der Kurvenscheibe 57 gegenüber der Welle 7 axial um ca. 2 bis 10 mm, vorzugsweise 5 mm, verschoben. Damit die Scheibe 62 des Verriegelungsstifts 59 stets an der Anlagefläche 61 der Kurvenscheibe 57 anliegt, wird der Verriegelungsstift 59 durch eine Feder 63 gegen die Anlagefläche 61 vorgespannt. Das freie Ende 64 des Verriegelungsstifts 59 wirkt mit einer drehfest mit der Welle 51 verbundenen Nocke 65 zusammen, wenn der Verriegelungsstift 59 axial nach links verschoben ist. Diese Nokke 65 sorgt für eine Arretierung der Welle 7, so daß ein Verschwenken des Schutzbügels 4 ausgeschlossen ist.

Um die Arretierung der Welle 7 wieder aufzuheben, wird die Welle 51 durch den Elektromotor 56 in Gegenrichtung angetrieben, so daß sich der Verriegelungsstift 59 entlang der Steigung der Kurvenscheibe 57 zurückbewegt. Der Verriegelungsstift 59 wird dabei axial nach rechts verschoben, so daß er nicht mehr mit der Nocke 65 zusammenwirkt. Durch weiteres Verdrehen der Riemenscheibe 52 gelangt der Stift 50 in Anlage an das Ende des Langlochs 51, so daß eine formschlüssige Verbindung zwischen der Welle 7 und der Riemenscheibe 52 gegeben ist. Durch weiteres Drehen der Riemenscheibe 52 wird dann der Schutzbügel 4 in die Freigabestellung verschwenkt.

Um auch bei Ausfall des Bordnetzes ein Überführen des Schutzbügels 4 in die Freigabestellung zu ermöglichen, ist der Verriegelungsstift 59 mit einem Handhebel 66 verbunden. Durch Ziehen am Handhebel 66 nach rechts kann der Verriegelungsstift 59 so weit nach rechts gezogen werden, daß er außer Eingriff zur Nocke 65 gerät, wodurch die Arretierung aufgehoben ist.

In der stationär gehaltenen Scheibe 60 sind außerdem zwei als Bolzen ausgebildete Endanschläge 67 vorgesehen, von denen nur einer zu sehen ist und die mit der Nocke 65 zusammenwirken. Diese Endanschläge 67 verhindern ein Verschwenken der Welle 7 über die Freigabe- bzw. Rückhaltestellung hinaus. Zusätzlich sind der Welle 7 zwei nicht dargestellte Endschalter zugeordnet, die den Elektromotor bei Erreichen der Freigabe- bzw. Rückhaltestellung abschalten.

Die Welle 7 ist außerdem von einem Arretierstift 68 durchdrungen, der mit einer nicht dargestellten Motorhaube in Wirkverbindung steht. Sobald die Motorhaube geöffnet wird, dringt der Arretierstift 68 in eine Öffnung der Welle 7 ein, so daß eine Verschwenkung des Schutzbügels 4 bei geöffneter Motorhaube zuverlässig unterbunden wird.

Figur 11 zeigt eine alternative Ausführungsform einer Rückhaltevorrichtung 2, wobei gleiche Bezugszeichen wiederum gleiche Teile benennen.

Der Schutzbügel 4 ist über eine Arretiervorrichtung 69 in seiner Rückhaltestellung arretierbar. Zur Entriegelung des Schutzbügels 4 muß dieser um ein Drehgelenk 72 zum Fahrer hin verschwenkt werden. Zur Begrenzung des Schwenkwinkels des Schutzbügels 4 nach außen weist die Welle 7 zwei Anschlagflächen 70 auf, die einerseits stirnseitig und andererseits radialseitig vorgesehen sind. Der Schutzbügel 4 ist mit einem L-förmigen Endstück 71 verbunden, das mit den Anschlagflächen 70 begrenzend zusammenwirkt.

Der Schutzbügel 4 ist über das Drehgelenk 72 mit der Welle 7 schwenkbar verbunden, wobei die Schwenkachse in der Rückhaltestellung in etwa vertikal ausgerichtet ist. Der Schutzbügel 4 ist außerdem durch eine Feder 73 in Richtung der dargestellten Arretierstellung vorgespannt, in der das Endstück 71 gegen die Welle 7 stößt. In dieser Lage ist ein Verdrehen der Welle 7 ausgeschlossen, so daß der Schutzbügel 4 in der Rückhaltestellung verbleibt.

Um den Schutzbügel 4 zu entriegeln, muß dieser zunächst im Uhrzeigersinn, also gegen den Fahrersitz 3, verschwenkt werden. Auf diese Weise wird ein am Endstück 71 des Schutzbügels 4 gehaltener Stift 74 der Arretiervorrichtung 69 zu einer Bohrung 75 eines Halteblechs 76 außer Eingriff gebracht. Anschließend kann der Schutzbügel 4 einfach in die Freigabestellung verschwenkt werden.

Um den Schutzbügel 4 wieder in die Rückhaltestellung zu überführen, genügt es, diesen einfach loszulassen. Durch das Eigengewicht des Schutzbügels 4 sowie ggf. durch die Wirkung der Gasfedern 9, 40 wird der Schutzbügel 4 wieder in die Rückhaltestellung gebracht. Um den Aufschlag des Schutzbügels 4 zu dämpfen, ist das Halteblech 76 Z-förmig gebogen, wobei es nach oben gegen den Stift 74 auskragt. Damit wird der Stift 74 gegen die Kraftwirkung einer Feder 77 zurückgedrückt, bis er mit der Bohrung 75 des Halteblechs 76 fluchtet und in diese eindringt. Damit ist die Welle 7 wieder verriegelt.

### Bezugszeichenliste

- 1: Flurförderfahrzeug
- 2: Rückhaltevorrichtung
- 3: Fahrersitz
- 4, 5, 6: Schutzbügel
- 7: Welle
- 8: Querträger
- 9: Gasfeder
- 10: Halteplatte
- 11, 12: Gelenk
- 13: Halteplatte
- 14: Stange
- 15: Kopfstütze
- 16: Teleskopstange
- 17: Öldämpfer
- 18: Kolbenstange
- 19: Mutter
- 20: Querholm
- 21: Dachkonstruktion
- 22: Hebewerkzeug
- 24: Stange
- 25: Halteprofil
- 26: Bolzen
- 27: Achse
- 29: Strebe
- 30, 31: Rohr
- 32: Fahrzeugchassis
- 33: Führungsschiene
- 34: Fußstück
- 35: Führungsschiene
- 36: vorderer Bereich
- 37: Schutzgehäuse
- 40: Gasfeder
- 41, 42: Arretierung
- 50: Stift
- 51: Langloch
- 52: Riemenscheibe
- 53: Riemen
- 54: Riemenscheibe
- 55: Antriebswelle
- 56: Elektromotor
- 57: Kurvenscheibe
- 58: Durchbrechung
- 59: Verriegelungsstift
- 60: Scheibe
- 60a: Bohrung
- 61: Anlagefläche
- 62: Scheibe
- 63: Feder
- 64: freies Ende
- 65: Nocke
- 66: Handhebel
- 67: Endanschlag
- 68: Arretierstift
- 69: Arretiervorrichtung
- 70: Anschlagfläche
- 71: Endstück
- 72: Drehgelenk
- 73: Feder
- 74: Stift
- 75: Bohrung
- 76: Halteblech
- 77: Feder

## Patentansprüche

1. Rückhaltesystem für einen Fahrer eines Fahrzeugs (1), das zumindest einen Fahrersitz (3) aufweist, insbesondere eines Fluförderfahrzeugs (1), wobei das Rückhaltesystem (2) von mindestens einem seitlich neben dem Fahrersitz (3) angeordneten Schutzbügel (4, 5, 6) gebildet ist, der durch eine horizontale, quer zur Fahrzeuglängserstreckung verlaufende Welle (7) aus einer in etwa vertikalen Freigabestellung in eine in etwa horizontale Rückhaltestellung verschwenkbar ist, **dadurch gekennzeichnet, daß** die Welle (7) über ein Getriebe (52, 53, 54) mit einem Elektromotor (56) in Wirkverbindung steht, und
an der Welle (7) eine vom Elektromotor (55) angetriebene, Kurvenscheibe (57) abgestützt ist, die gegenüber der Welle (7) begrenzt verdrehbar ist, wobei in eine teilkreisförmige Durchbrechung (58) der Kurvenscheibe (57) ein axial verschiebbarer Verriegelungsstift (59) eingreift, der bei Erreichen der Rückhaltestellung die Welle (7) verriegelt.

2. Rückhaltesystem nach Anspruch 1, **dadurch gekennzeichnet, daß** die Kurvenscheibe (57) mindestens eine Anlagefläche (61) für den Verriegelungsstift (59) aufweist, wobei die Anlagefläche (61) zur axialen Verschiebung des Verriegelungsstifts (59) zwischen einer Ver- und einer Entriegelungsstellung eine Steigung aufweist.

3. Rückhaltesystem nach Anspruch 2, **dadurch gekennzeichnet, daß** der Verriegelungsstift (59) in der Verriegelungsstellung mit einer die Welle (7) sperrenden Nocke (56) zusammenwirkt.

4. Rückhaltesystem nach mindestens einem der Ansprüche 1 bis 3, **dadurch gekennzeichnet, daß** der Verriegelungsstift (59) durch eine Feder (63) gegen die Kurvenscheibe (57) vorgespannt ist.

5. Rückhaltesystem nach mindestens einem der Ansprüche 1 bis 4, **dadurch gekennzeichnet, daß** der Verriegelungsstift (59) mit einem Handhebel (66) zur Überführung in die Entriegelungsstellung in Wirkverbindung steht.

6. Rückhaltesystem nach mindestens einem der Ansprüche 1 bis 4, **dadurch gekennzeichnet, daß** die Welle (7) ein Langloch (51) aufweist, in das ein Stift (50) zur Drehmomentübertragung auf die Welle (7) eingreift.

7. Rückhaltesystem nach mindestens einem der Ansprüche 1 bis 6 oder nach dem Oberbegriff des Anspruchs 1, **dadurch gekennzeichnet, daß** der Schutzbügel (4, 5, 6) in der Rückhaltestellung um eine weitere, in etwa vertikale Achse zwischen einer Ver- und einer Entriegelungsstellung verschwenkbar ist, wobei die Welle (7) mindestens eine die Schwenkbewegung des Schutzbügels (4, 5, 6) in der Rückhaltestellung begrenzende Anschlagfläche (70) aufweist.

8. Rückhaltesystem nach Anspruch 7, **dadurch gekennzeichnet, daß** an der Welle (7) mindestens zwei Anschlagflächen (70) für den Schutzbügel (4, 5, 6) vorgesehen sind.

9. Rückhaltesystem nach Anspruch 7 oder 8, **dadurch gekennzeichnet, daß** der Schutzbügel (4, 5, 6) durch mindestens eine Feder (73) in Richtung der Verriegelungsstellung belastet ist.

10. Rückhaltesystem nach mindestens einem der Ansprüche 7 bis 9, **dadurch gekennzeichnet, daß** der Schutzbügel (4, 5, 6) in der Entriegelungsstellung gegen den Fahrersitz (3) verschwenkt ist.

11. Rückhaltesystem nach mindestens einem der Ansprüche 1 bis 10, **dadurch gekennzeichnet, daß** an der Welle (7) mindestens eine diese in Schwenkrichtung belastende Feder (9, 40) angreift.

12. Rückhaltesystem nach mindestens einem der Ansprüche 1 bis 11, **dadurch gekennzeichnet, daß** die Welle (7) am Fahrersitz (3) oder am Fahrzeugrahmen (21, 32) abgestützt ist.

13. Rückhaltesystem nach mindestens einem der Ansprüche 1 bis 12, **dadurch gekennzeichnet, daß** die Welle (7) in ihrer Position verstellbar und/oder teleskopartig verlängerbar ist.

14. Rückhaltesystem nach mindestens einem der Ansprüche 1 bis 13, **dadurch gekennzeichnet, daß** die Welle (7) mit einer Nocke (56) in Wirkverbindung steht, die mit Endanschlägen (67) zusammenwirkt, die eine Verschwenkung der Welle (7) über die Freigabestellung und die Rückhaltestellung hinaus verhindern.

15. Rückhaltesystem nach mindestens einem der Ansprüche 1 bis 14, **dadurch gekennzeichnet, daß** zur Verriegelung der Welle (7) in der Rückhaltestellung mindestens ein am Schutzbügel (4) federnd gehaltener Stift (74) in eine Bohrung (75) eines Z-förmig gebogenen, stationär abgestützten Halteblechs (76) eingreift.

16. Rückhaltesystem nach mindestens einem der Ansprüche 1 bis 15, **dadurch gekennzeichnet, daß** die Welle (7) mit mindestens einem Sensor in Wirkverbindung steht, der sie bei Fahrbereitschaft des Fahrzeugs (1) in die Rückhaltestellung verschwenkt.

17. Rückhaltesystem nach mindestens einem der Ansprüche 1 bis 16, **dadurch gekennzeichnet, daß** die Welle (7) mit einem Arretierstift (68) in Wirkverbindung steht, der diese bei geöffneter Motorhaube arretiert.

## Claims

1. Restraint system for a driver of a vehicle (1) which has at least one driver's seat (3), in particular an industrial truck (1), the restraint system (2) being formed by at least one protective bracket (4, 5, 6) which is arranged laterally next to the driver's seat (3) and can be pivoted by a horizontal shaft (7) running transversely with respect to the longitudinal extent of the vehicle from an approximately vertical release position into an approximately horizontal restraint position, **characterized in that** the shaft (7) is operatively connected to an electric motor (56) via a gear mechanism (52, 53, 54), and a cam plate (57) which is driven by the electric motor (56) is supported on the shaft (7) and is rotatable to a limited extent with respect to the shaft (7), an axially displaceable locking pin (59) engaging in a partially circular aperture (58) in the cam plate (57), the said locking pin locking the shaft (7) when the restraint position is reached.

2. Restraint system according to Claim 1, **characterized in that** the cam plate (57) has at least one bearing surface (61) for the locking pin (59), the bearing surface (61) having a slope for the axial displacement of the locking pin (59) between a locking and an unlocking position.

3. Restraint system according to Claim 2, **characterized in that**, in the locking position, the locking pin (59) interacts with a cam (65) blocking the shaft (7).

4. Restraint system according to at least one of Claims 1 to 3, **characterized in that** the locking pin (59) is prestressed against the cam plate (57) by a spring (63).

5. Restraint system according to at least one of Claims 1 to 4, **characterized in that** the locking pin (59) is operatively connected to a hand lever (66) for transferring it into the unlocking position.

6. Restraint system according to at least one of Claims 1 to 4, **characterized in that** the shaft (7) has an elongated hole (51) in which a pin (50) engages for the transmission of torque to the shaft (7).

7. Restraint system according to at least one of Claims 1 to 6 or according to the precharacterizing clause of Claim 1, **characterized in that**, in the restraint position, the protective bracket (4, 5, 6) is pivotable about a further, approximately vertical axis between a locking and an unlocking position, the shaft (7) having at least one stop surface (70) which limits the pivoting movement of the protective bracket (4, 5, 6) in the restraint position.

8. Restraint system according to Claim 7, **characterized in that** at least two stop surfaces (70) for the protective bracket (4, 5, 6) are provided on the shaft (7).

9. Restraint system according to Claim 7 or 8,
**characterized in that** the protective bracket (4, 5, 6) is loaded in the direction of the locking position by means of at least one spring (73).

10. Restraint system according to at least one of Claims 7 to 9, **characterized in that**, in the unlocking position, the protective bracket (4, 5, 6) is pivoted against the driver's seat (3).

11. Restraint system according to at least one of Claims 1 to 10, **characterized in that** the shaft (7) is acted upon by at least one spring (9, 40) which loads it in the pivoting direction.

12. Restraint system according to at least one of Claims 1 to 11, **characterized in that** the shaft (7) is supported on the driver's seat (3) or on the vehicle frame (21, 32).

13. Restraint system according to at least one of Claims 1 to 12, **characterized in that** the shaft (7) is adjustable in its position and/or is extendable telescopically.

14. Restraint system according to at least one of Claims 1 to 13, **characterized in that** the shaft (7) is operatively connected to a cam (65) which interacts with end stops (67) which prevent the shaft (7) from pivoting beyond the release position and the restraint position.

15. Restraint system according to at least one of Claims 1 to 14, **characterized in that**, in order to lock the shaft (7) in the restraint position, at least one pin (74) which is held in a resilient manner on the protective bracket (4) engages in a hole (75) in a retaining plate (76) which is bent in a Z shape and is supported in a stationary manner.

16. Restraint system according to at least one of Claims 1 to 15, **characterized in that** the shaft (7) is operatively connected to at least one sensor which, when the vehicle (1) is ready to drive, pivots it into the restraint position.

17. Restraint system according to at least one of Claims 1 to 16, **characterized in that** the shaft (7) is operatively connected to a retaining pin (68) which retains it when the engine bonnet is open.

## Revendications

1. Système de retenue pour un conducteur d'un véhicule (1) qui présente au moins un siège de conducteur (3), notamment d'un chariot de manutention (1), dans lequel le système de retenue (2) est formé par au moins un arceau de sécurité (4, 5, 6) disposé latéralement à côté du siège du conducteur, lequel peut pivoter au moyen d'un arbre (7) horizontal s'étendant transversalement à la direction longitudinale du véhicule d'une position de libération approximativement verticale dans une position de retenue approximativement horizontale, **caractérisé en ce que** l'arbre (7) est en liaison coopérante par le biais d'une transmission (52, 53, 54) avec un moteur électrique (56), et **en ce qu'**un disque à came (57) entraîné par le moteur électrique (56) est supporté sur l'arbre (7), lequel disque à came peut tourner de manière limitée par rapport à l'arbre (7), une broche de verrouillage (59) déplaçable axialement venant en prise dans un orifice (58) en forme de segment de cercle du disque à came (57) et verrouillant l'arbre (7) une fois la position de retenue atteinte.

2. Système de retenue selon la revendication 1, **caractérisé en ce que** le disque à came (57) présente au moins une surface d'appui (61) pour la broche de verrouillage (59), la surface d'appui (61) présentant un pas pour le déplacement axial de la broche de verrouillage (59) entre une position de verrouillage et une position de déverrouillage.

3. Système de retenue selon la revendication 2, **caractérisé en ce que** la broche de verrouillage (59) coopère dans la position de verrouillage avec une came (65) bloquant l'arbre (7).

4. Système de retenue selon au moins l'une quelconque des revendications 1 à 3, **caractérisé en ce que** la broche de verrouillage (59) est précontrainte par un ressort (63) contre le disque à came (57).

5. Système de retenue selon au moins l'une quelconque des revendications 1 à 4, **caractérisé en ce que** la broche de verrouillage (59) est en liaison coopérante avec une manette (66) pour le passage dans la position de déverrouillage.

6. Système de retenue selon au moins l'une quelconque des revendications 1 à 4, **caractérisé en ce que** l'arbre (7) présente un trou oblong (51) dans lequel une goupille (50) vient en prise pour le transfert de couple à l'arbre (7).

7. Système de retenue selon au moins l'une quelconque des revendications 1 à 6, ou selon le préambule de la revendication 1, **caractérisé en ce que** l'arceau de sécurité (4, 5, 6) peut pivoter dans la position de retenue autour d'un axe supplémentaire approximativement vertical, entre une position de verrouillage et une position de déverrouillage, l'arbre (7) présentant au moins une surface de butée (70) limitant le mouvement de pivotement de l'arceau de sécurité (4, 5, 6) dans la position de retenue.

8. Système de retenue selon la revendication 7, **caractérisé en ce qu'**au moins deux surfaces de butée (70) sont prévues sur l'arbre (7) pour l'arceau de sécurité (4, 5, 6).

9. Système de retenue selon la revendication 7 ou 8, **caractérisé en ce que** l'arceau de sécurité (4, 5, 6) est sollicité dans la direction de la position de verrouillage par au moins un ressort (73).

10. Système de retenue selon au moins l'une quelconque des revendications 7 à 9, **caractérisé en ce que** l'arceau de sécurité (4, 5, 6) est pivoté dans la position de déverrouillage contre le siège du conducteur (3).

11. Système de retenue selon au moins l'une quelconque des revendications 1 à 10, **caractérisé en ce qu'**on prévoit sur l'arbre (7) au moins un ressort (9, 40) le sollicitant dans la direction de pivotement.

12. Système de retenue selon au moins l'une quelconque des revendications 1 à 11, **caractérisé en ce que** l'arbre (7) est supporté sur le siège du conducteur (3) ou sur le châssis du véhicule (21, 32).

13. Système de retenue selon au moins l'une quelconque des revendications 1 à 12, **caractérisé en ce que** l'arbre (7) peut être ajusté en position et/ou prolongé de manière télescopique.

14. Système de retenue selon au moins l'une quelconque des revendications 1 à 13, **caractérisé en ce que** l'arbre (7) est en liaison coopérante avec une came (56), qui coopère avec des butées de fin de course (67) qui empêchent un pivotement de l'arbre (7) au-delà de la position de libération et de la position de retenue.

15. Système de retenue selon au moins l'une quelconque des revendications 1 à 14, **caractérisé en ce que** pour le verrouillage de l'arbre (7) dans la position de retenue, au moins une broche (74) fixée de manière élastique sur l'arceau de sécurité (4) vient en prise dans un alésage (75) d'une tôle de fixation (76) cintrée en forme de Z et supportée de manière stationnaire.

16. Système de retenue selon au moins l'une quelconque des revendications 1 à 15, **caractérisé en ce que** l'arbre (7) est en liaison coopérante avec au moins un détecteur qui le fait pivoter dans la position de retenue lorsque le véhicule (1) est prêt à partir.

17. Système de retenue selon au moins l'une quelconque des revendications 1 à 16, **caractérisé en ce que** l'arbre (7) est en liaison coopérante avec une broche de blocage (68) qui le bloque lorsque le capot du moteur est ouvert.
